# EUROPEAN PATENT APPLICATION

(11) **EP 2 157 730 A1**
(43) Date of publication of application: **24.02.2010**
(21) Application number: 07743824.0
(22) Date of filing: 21.05.2007
(51) Int. Cl.: H04L 12/24, H04Q 7/34

(54) **RADIO BASE STATION DEVICE, NETWORK CONFIGURATION MANAGEMENT SYSTEM, NETWORK CONFIGURATION MANAGEMENT DEVICE AND NETWORK CONFIGURATION MANAGEMENT METHOD**

(71) Applicant: Fujitsu Limited, Kawasaki-shi, Kanagawa 211-8588 (JP)
(72) Inventor: KUROKOCHI, Fumiyasu, Kawasaki-shi Kanagawa 211-8588 (JP)
(74) Representative: Stebbing, Timothy Charles
(86) International application number: PCT/JP2007/060390
(87) International publication number: WO 2008/142776

(57) **Abstract**

A wireless base station apparatus, using a global positioning system, acquires installation position information for the wireless base station apparatus and transmits the installation position information to a connection destination information server. The connection destination information server receives the installation position information; acquires from an address database, address information corresponding to the installation position information; acquires from a connection destination database, connection destination information corresponding to the address information; and transmits the connection destination information to a wireless base station apparatus. The wireless base station apparatus receives the connection destination information and based on the connection destination information, executes setting related to a gateway apparatus, an operation and maintenance apparatus, etc. that are connection destinations thereof. If the connection destination of the wireless base station apparatus is to be changed, the operator changes the correspondence between the address information and the connection destination information in the connection destination database.

## Description

### TECHNICAL FIELD

The present invention relates to a wireless base station apparatus, network configuration administering system that manages wireless base stations connected to a network, network configuration administering apparatus, and network configuration administering method.

### BACKGROUND ART

In mobile communication systems, such as worldwide interoperability for microwave access (WiMAX), a wireless base station apparatus (BS) is connected to a gateway apparatus (e.g., access service network gateway (ASN-GW)) and an operation and maintenance (OM) apparatus (e.g., an operation and maintenance center (OMC)) and thus, is provided with information concerning IP addresses identifying the apparatuses connected to the wireless base station.

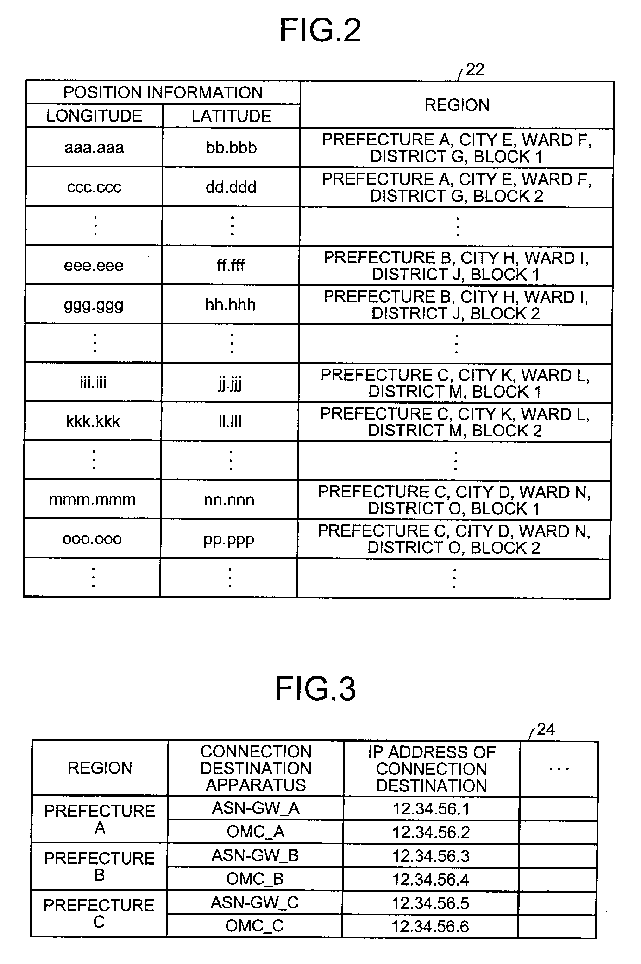

An example of technology for executing download to a base station is recited in Patent Document 1, which discloses that "power is supplied to a wireless base station 7 after connection to a wireless base station control apparatus 5 (21). With the supply of power as a trigger, the wireless base station 7 executes a self test at an initial setting control unit 36 (22) and after startup is complete, a station information reading processing-unit 32 depicted in HYPERLINK "JavaScript: void(0) FIG. 3 reads out, for the wireless base station control apparatus 5 and from a station information table 31 (23), information concerning the wireless base station 7 and transmits the read information to the wireless base station control apparatus 5 via a transmission control unit 34 (26). The wireless base station control apparatus 5 receives the information transmitted thereto (29), correlates a circuit number with the received information, records the information as information to be managed and correlates thereto a self-identifying number and a software version number, and further transmits the information through a relay station to a network service control apparatus 3 (211). The network service control apparatus 3 receives the information (215) and from the received information, correlates and edits the relay station 4, the wireless base station control apparatus 5 and the wireless base station 7 (216), records/accumulates the information (217), and through the wireless base station control apparatus 5, executes download to the wireless base station 7 (218)".

Patent Document 1: Japanese Laid-Open Patent Publication No. H6-261362 (paragraphs [0010] to [0011])

### DISCLOSURE OF INVENTION

### PROBLEM TO BE SOLVED BY THE INVENTION

However, in conventional network configuration administering systems, the operator conducting operation and maintenance of the network sets each connection destination with respect to numerous wireless base station apparatuses and thus, a problem arises in that operation and maintenance incurs enormous cost and consumes a great deal of time. Further, if gateway apparatuses and OM apparatuses are increased accompanying increases in wireless base station apparatuses, a portion of the connection destinations of the wireless base station apparatuses are switched from existing gateway apparatuses and OM apparatuses to the newly added gateway and OM apparatuses. The work involved in this switch is extremely burdensome. In conventional network configuration administrating systems, the operator is responsible for the changing of connections as well.

In light of the above, an object of the present invention is to set station data at a wireless base station apparatus in a relatively simple manner.

### MEANS FOR SOLVING PROBLEM

To solve the problems above and achieve an object, the present invention has the following characteristics. A wireless base station apparatus acquires position information therefor and transmits the position information to a network configuration administering apparatus. The network configuration administering apparatus receives the installation position information for the wireless base station apparatus, acquires connection destination information corresponding to the installation position information from a connection destination database, and transmits the connection destination information to the wireless base station apparatus. The connection destination database is configured to store therein correspondence relations between position information and connection destination information. The wireless base station apparatus sets a connection destination thereof based on the connection destination information.

### EFFECT OF THE INVENTION

According to the present invention, station data is set at a wireless base station apparatus in a relatively simple manner.

### BRIEF DESCRIPTION OF DRAWINGS

FIG. 1 is a schematic of a basic configuration of a network configuration administrating system according to the present invention;
FIG. 2 is a schematic of an address database;
FIG. 3 is a schematic of a connection destination database before updating;
FIG. 4 is a schematic of an example of network configuration before update of the network configuration administering system according to the embodiment;
FIG. 5 is a schematic of another example of network configuration after update of the network configuration administrating system according to the embodiment;
FIG. 6 is a schematic of the contents registered in the connection destination database after updating; and
FIG. 7 is a schematic of processing for setting a connection destination executed by the network configuration administering system according to the embodiment.

### EXPLANATIONS OF LETTERS OR NUMERALS

- 1, 4a, 4b, 4c, 4d: wireless base station apparatus
- 2: connection destination information server
- 3: IP network
- 11: position information acquiring unit
- 12: position information transmitting unit
- 13: connection destination information receiving unit
- 14: connection destination setting unit
- 21: position information receiving unit
- 22: address database
- 23: address searching unit
- 24: connection destination database
- 25: connection destination searching unit
- 26: connection destination information transmitting unit
- 27: update information acquiring unit

### BEST MODE(S) FOR CARRYING OUT THE INVENTION

A wireless base station apparatus, a network configuration administering system, a network configuration administering apparatus, and a network configuration administering method according to the present invention will be explained with reference to the accompanying drawings. Here, an example will be explained in which the present invention is applied to a WiMAX system network. However, the present invention is not limited hereto.

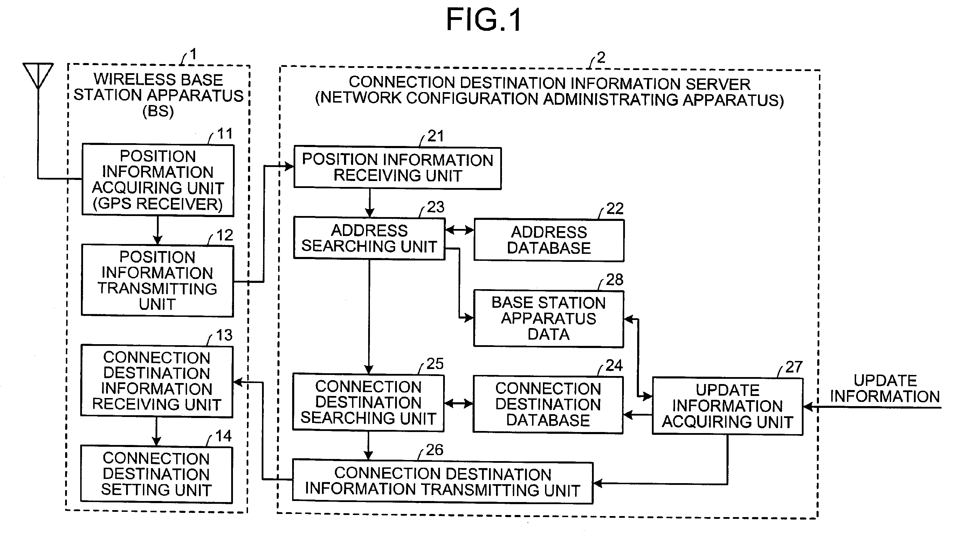

FIG. 1 is a schematic of a basic configuration of a network configuration administrating system according to the present invention. FIGs. 2 and 3 are respectively schematics of an address database used in the network configuration administrating system and a connection destination database before update. As depicted in FIG. 1, the network configuration administrating system includes a wireless base station apparatus (BS) 1 and a connection destination information server 2 having a function as a network configuration administering apparatus. The wireless base station apparatus 1 and the connection destination information server 2 are connected to a network, not depicted.

The wireless base station apparatus 1 includes a position information acquiring unit 11, a position information transmitting unit 12, a connection destination information receiving unit 13, and a connection destination setting unit 14. The position information acquiring unit 11 has an antenna and a GPS receiver. The position information acquiring unit 11 receives signals from global positioning system satellites, and acquires information concerning latitude and longitude as installation position information concerning the wireless base station apparatus 1. As the global positioning system and GPS receiver are known technologies, explanation thereof will be omitted herein. The wireless base station apparatus 1 is preliminarily provided with the IP address of the connection destination information server 2.

The position information transmitting unit 12 designates the IP address of the connection destination information server 2 as the destination IP address and transmits to the network, the installation position information acquired by the position information acquiring unit 11. The connection destination information receiving unit 13 receives connection destination information from the connection destination information server 2 via the network. The connection destination information includes information concerning the IP addresses of gateway apparatuses and OM apparatuses that are connection destinations (different from the connection destination information server 2) during operation of the wireless base station apparatus 1. The connection destination setting unit 14 sets, as a connection destination, the IP address received by the connection destination information receiving unit 13. The position information may include the IP address of the wireless base station apparatus or identification information previously set in the wireless base station apparatus, and the connection destination server 2 may transmit the connection destination information using an IP address or by broadcast. Broadcast data includes identification information for or the IP address of the wireless base station apparatus and if the broadcast data received by the wireless base station apparatus includes identification information therefor or the IP address thereof, the wireless base station apparatus takes in the information as destination data therefor to acquire connection destination information.

The connection destination information server 2 includes a position information receiving unit 21, an address database 22, an address searching unit 23, a connection destination database 24, a connection destination searching unit 25, a connection destination information transmitting unit 26, and an update information acquiring unit 27. The position information receiving unit 21 receives from the network, installation position information concerning the wireless base station apparatus 1. The address database 22 is a database correlating position information and address information.

The address searching unit 23 searches the address database 22, and acquires address information corresponding to the installation position information received by the position information receiving unit 21. Further, the address searching unit 23, for each wireless base station apparatus and as base station apparatus data 28, records the address information acquired by the search together with the IP address (transmission origin) included in the packet of installation position information received by the position information receiving unit 21.

Without limitation hereto, for example, in the exemplary address database 22 depicted in FIG. 2, latitude and longitude information is correlated with regions designated by prefecture, city, ward, district, and block. Accordingly, based on the latitude and longitude information concerning the installation position of the wireless base station apparatus 1, the address searching unit 23 searches the address database 22 and thereby, the address of the installation position may be known in terms of the prefecture, city, ward, district and block.

FIG. 2 is a schematic of the address database 22. The latitude and longitude information recorded in the address database 22 may be more precise or may be more general. Further, designation of regions may be to the extent of city, ward, district, etc., or may be more precise to include the street number. An example of a mapping software product that obtains address information in this way from positional information concerning latitude and longitude is the ReverseGeoCoder API (trade name) by Alps, Inc. (internet<URL:http://www.alpsmap.jp/mapinfo/data/geocoding/>)

The connection destination database 25 is a database correlating address information and connection destination information. The connection destination searching unit 25 searches the connection destination database 24 and acquires the connection destination information correlated with the address information obtained from the search executed by the address searching unit 23. Without limitation hereto, for example, in the exemplary connection destination database 24 depicted in FIG. 3, regions are divided into units of prefecture, and according to prefecture, connection destination apparatuses and the IP addresses thereof are correlated. Thus, based on address information concerning the wireless base station apparatus 1, the connection destination search unit 25 searches the connection destination database 24 and thereby, the connection destination apparatus for the wireless base station apparatus 1 and the IP address of the connection destination may be known. The operator is able to arbitrarily set the range of the regions in the connection destination database 24.

FIG. 3 is a schematic of the connection destination database 24, the designation of regions recorded therein may be to the extent of city, ward, district, etc. The connection destination information transmitting unit 26 transmits to the network, connection destination information, such as an IP address, obtained from the search executed by the connection destination searching unit 25. The update information acquiring unit 27 acquires, from an external source, update information for the connection destination database 24. This update information is information to change the correlation between the address information and the connection destination information in the connection destination database 24, and is provided by the operator.

The update information acquiring unit 27, based on update information provided by the operator, updates the information registered in the connection destination database 24. Further, the update information acquiring unit 27 references the base station apparatus data 28 to acquire the IP address of the wireless base station apparatus 1 for which the connection destination is to be updated. The update information acquiring unit 27 forwards to the connection destination information transmitting unit 26, information concerning the IP address, etc. of the gateway apparatus, OM apparatus, etc. that are new connection destinations of the wireless base station apparatus 1 after update of the connection destination database 24, and further forwards the IP address of the wireless base station apparatus 1 subject to update. The connection destination information transmitting unit 26 designates the IP address received from the update information acquiring unit 27 as the destination IP address and transmits to the network, information concerning the new connection destination apparatus, such as the IP address thereof.

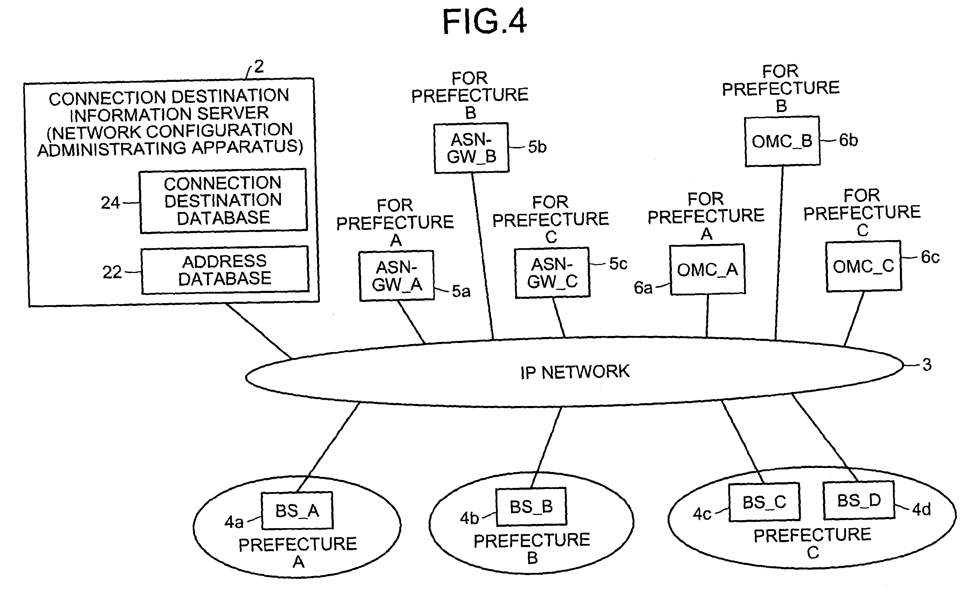

Processing for setting a connection destination of the wireless base station in the network configuration administering system depicted in FIG. 1 will be explained. FIG. 4 is a schematic of an example of network configuration before update of the network configuration administering system according to the embodiment. In the example, as depicted in FIG. 4, the connection destination information server 2, a wireless base station apparatus A(BS_A) 4a for prefecture A, a wireless base station apparatus B(BS_B) 4b for prefecture B, a wireless base station apparatus C(BS_C) 4c for prefecture C, and a wireless base station apparatus D(BS_D) 4d for prefecture D are connected to an IP network 3.

Further, a gateway apparatus A(ASN-GW_A) 5a and an OM apparatus A(OMC_A) 6a respectively for prefecture A, a gateway apparatus B(ASN-GW_B) 5b and an OM apparatus B(OMC_B) 6b respectively for prefecture B, and a gateway apparatus C(ASN-GW_C) 5c and an OM apparatus C(OMC_C) 6c respectively for prefecture C are connected to the IP network 3. This configuration corresponds to the contents registered in the connection destination database 24 depicted in FIG. 3.

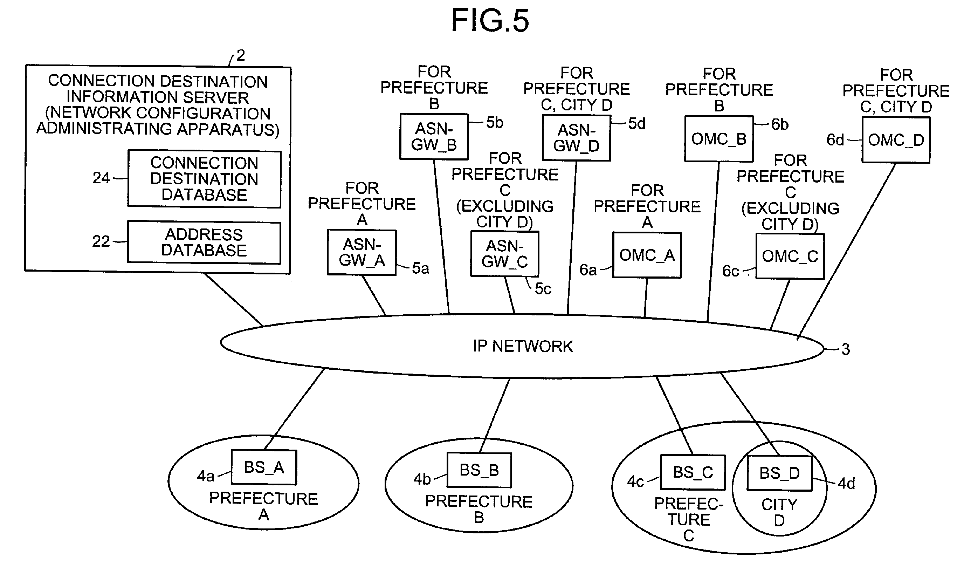

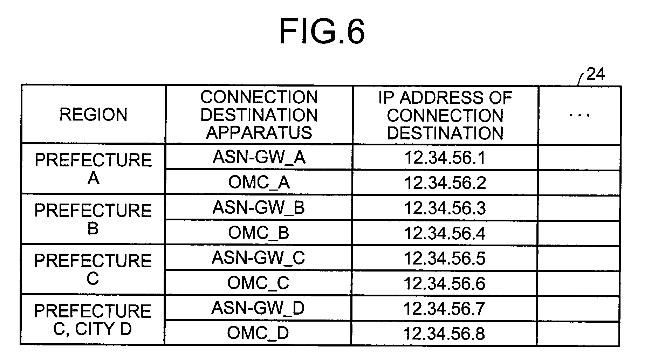

FIG. 5 is a schematic of another example of network configuration of the network configuration administrating system according to the embodiment. As depicted in FIG. 5, this network configuration, with respect to the configuration depicted in FIG. 4, additionally includes a gateway apparatus D5d and an OM apparatus D6d respectively for city D in prefecture C. In the example depicted in FIG. 5, with respect to prefecture C, the gateway apparatus D5d and the OM apparatus D6d are provided in city D in prefecture C, and the wireless base station apparatus C4c is provided in prefecture C exclusive of city D. FIG. 6 is a schematic of the contents registered in the connection destination database of the network configuration depicted in FIG. 5.

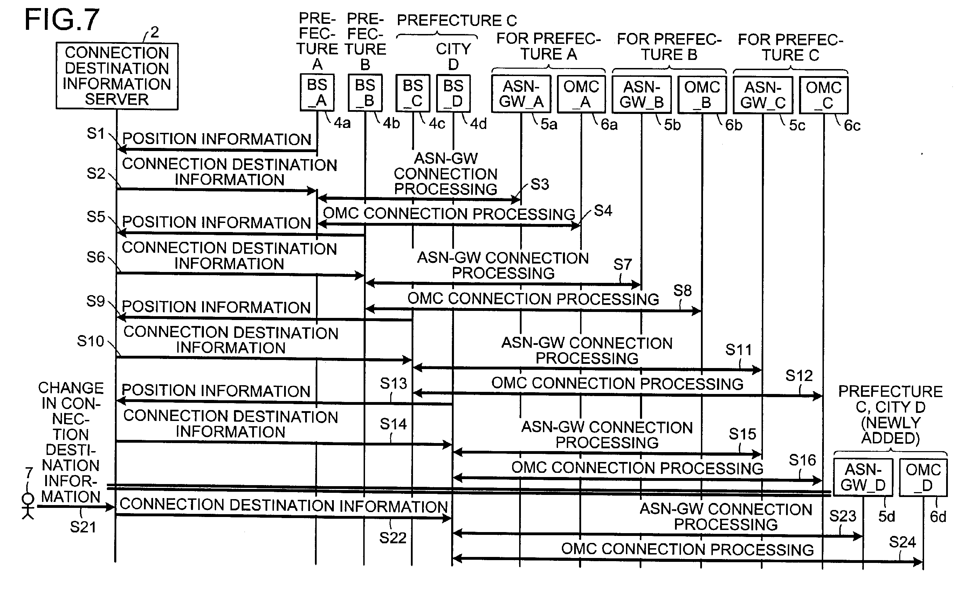

FIG. 7 is a schematic of processing for setting a connection destination of a wireless base station apparatus in the network configuration depicted in FIG. 4 and for setting a connection destination of the wireless base station apparatus when the network configuration depicted in FIG. 4 is changed the network configuration depicted in FIG. 5. First, processing for setting a connection destination of the wireless base station apparatuses in the network configuration depicted in FIG. 4 will be described. As depicted in FIG. 7, the wireless base station apparatus 4a (4b, 4c, and 4d) acquires installation position information corresponding thereto.

The wireless base station apparatus 4a (4b, 4c, and 4d) designates the IP address of the connection destination information server 2 as the destination address and transmits the installation position information to the IP network 3. Thus, the wireless base station apparatus 4a (4b, 4c, and 4d) thereby notifies the connection destination information server 2 of installation position information for the wireless base station apparatus 4a (4b, 4c, and 4d) (steps S1, S5, S9, and S13).

The connection destination information server 2 receives the installation position information transmitted from the wireless base station apparatus 4a (4b, 4c, and 4d) and based on the installation position information, derives connection destination information for the wireless base station apparatus 4a (4b, 4c, and 4d) from the connection destination database 24 (refer to FIG. 3).

The connection destination information includes the IP address of the gateway apparatus 5a (5b, 5c, and 5d) and the IP address of the OM apparatus 6a (6b, 6c, and 6d) that are respectively connection destinations of the wireless base station apparatus 4a (4b, 4c, and 4d). The connection destination information server 2 designates the IP address of the wireless base station apparatus 4a (4b, 4c, and 4d) as a destination address and transmits the connection destination information to the IP network 3. Thus, the connection destination information server 2 thereby informs the wireless base station apparatus 4a (4b, 4c, and 4d) of the connection destination information (steps S2, S6, S10, and S14).

The wireless base station apparatus 4a (4b, 4c, and 4d) receives the connection destination information transmitted from the connection destination information server 2, and registers the IP address included in the connection destination information as the IP address of the connection destination. The wireless base station apparatus 4a (4b, 4c, and 4d), based on the IP address of the connection destination, executes processing to establish a connection with the prefecture-specific gateway apparatus 5a (5b, 5c, and 5d) (steps S3, S7, S11, and S15). Further, the wireless base station apparatus 4a (4b, 4c, and 4d), based on the IP address of the connection destination, executes processing to establish a connection with the prefecture-specific OM apparatus 6a (6b, 6c, and 6d) (steps S4, S8, S12, and S16).

Thus, connection between the wireless base station apparatus A4a for prefecture A, the gateway apparatus A5a for prefecture A, and the OM apparatus A6a for prefecture A is established through the IP network 3; connection between the wireless base station apparatus B4b for prefecture B, the gateway apparatus B5b for prefecture B, and the OM apparatus B6b for prefecture B is established through the IP network 3; and connection between the wireless base station apparatus C4c and D4d respectively for prefecture C, the gateway apparatus C5c for prefecture C, and the OM apparatus C6c for prefecture C is established through the IP network 3.

Processing will be described for setting connection destinations of the wireless base station apparatus installed in city D in prefecture C when the wireless base station apparatus D5d for city D in prefecture C and the OM apparatus D6d for city D in prefecture C are added during operation under the state depicted in FIG. 5. As depicted in FIG. 7, the operator 7 changes the connection destination information to change the contents registered in the connection destination database 24 and inputs the updated information into the connection destination information server 2 (step S21). Consequently, in the connection destination database 24, a record for the connection destination apparatus for the city D in prefecture C and the IP address thereof is added (refer to FIG. 6).

The connection destination information server 2 extracts the wireless base station apparatus 4d from the base station apparatus data 28, designates the IP address of the wireless base station apparatus 4d as the destination address, and transmits the new connection destination information to the IP network 3 and thereby, informs the wireless base station apparatus D4d for city D in prefecture C of the new connection destination information (step S22). The wireless base station apparatus D4d for city D in prefecture C receives the connection destination information transmitted from the connection destination information server 2 and registers the IP address included in the connection destination information as a new IP address for the connection destination.

The wireless base station apparatus D4d for city D in prefecture C, based on the new IP address for the connection destination, executes processing to establish a connection with the gateway apparatus D5d and the OM apparatus D6 respectively for city D in prefecture C (steps S23 and S24). Thus, connection between the wireless base station apparatus D4d in city D of prefecture C and the newly added gateway apparatus D5d and OM apparatus D6d for city D in prefecture C is established through the IP network 3.

As described, according to the embodiment, through the use of a global positioning system, a wireless base station apparatus is able to automatically acquire installation position information thereof and by receiving report of the information, the connection destination information server is able to automatically acquire installation position information for the wireless base station apparatus. Further, the connection destination information server converts the installation position information into address information and based on the address information, determines the IP addresses of the gateway apparatus and of the OM apparatus that are connection destinations of the wireless base station apparatus and thus, is able to automatically set the connection destination of the wireless base station apparatus.

In this way, apparatuses connected to the wireless base station apparatus such as the gateway apparatus and the OM apparatus are managed based on the address of the region in which the wireless base station apparatus is installed, eliminating the burdensome task of setting information for each connection destination of each wireless base station apparatus by the operator. Further, by the operator merely changing the contents registered in the connection destination database, the connection destinations of the wireless base station apparatuses are changed, thereby enabling reductions in operating and maintenance costs. The effects are especially significant when the number of installations of the wireless base station apparatuses is great such as when connection destinations are changed in units of several dozen to several hundred.

In place of the connection destination information server, any one of the address database and the connection destination database connected to the network may be provided and the OM apparatus may have a function of the connection destination information server. In addition to an IP network, a network utilizing a message transfer protocol (MTP) is applicable to the embodiment. In this case, the connection destination information includes destination point code (DPC) in place of the IP address.

As the connection destination information server, position information and correlations thereof with corresponding connection destination information are stored; and through the receipt of position information from a wireless base station, connection destination information corresponding to the indicated position is reported to the wireless base station and thus, communication with a wireless base station apparatus that uses a communication scheme different from IP communication may be performed.

### INDUSTRIAL APPLICABILITY

As described, the wireless base station apparatus, the network configuration administering system, the network configuration administrating apparatus, and the network configuration administrating method according to the present invention are useful in the operation and maintenance of the network configuration of a mobile communication system, and is particularly applicable to the operation and maintenance of the network configuration of a WIMAX system.

## Claims

1. A wireless base station apparatus comprising:
an acquiring unit that acquires position information concerning the wireless base station apparatus;
a transmitting unit that transmits the position information to a management apparatus;
a receiving unit that receives, from the management apparatus, connection destination information that the management apparatus obtains from search processing based on the position information; and
a setting unit that sets the connection destination information as a connection destination.

2. A network configuration administering system comprising:
a wireless base station apparatus that includes:
a position information acquiring unit that acquires installation position information concerning the wireless base station apparatus,
a position information transmitting unit that transmits to a network, the installation position information acquired by the position information acquiring unit,
a connection destination information receiving unit that receives from the network, connection destination information, and
a connection destination setting unit that sets the connection destination information received by the connection destination information receiving unit; and
a network configuration administering apparatus that is connected to the wireless base station apparatus through the network and includes:
an address database correlating position information and address information,
a connection destination database correlating the address information and the connection destination information,
a position information receiving unit that receives through the network, installation position information concerning the wireless base station apparatus,
an address searching unit that searches the address database for the address information corresponding to the installation position information received by the position information receiving unit,
a connection destination searching unit that searches the connection destination database for connection destination information corresponding to the address information obtained by the address searching unit, and
a connection destination information transmitting unit that transmits to the network, the connection destination information obtained by the connection destination searching unit.

3. The network configuration administrating system according to claim 2, wherein the position information acquiring unit includes a GPS receiver that acquires the installation position information using a global positioning system.

4. The network configuration administrating system according to claim 2, wherein
the network configuration administrating apparatus includes an update information acquiring unit that acquires from an external source, update information for the connection destination database, updates information registered in the connection destination database based on the acquired update information and forwards the update information to the connection destination information transmitting unit, and
the connection destination information transmitting unit transmits to the network, the update information received from the update information acquiring unit.

5. A network configuration administrating apparatus comprising:
an address database correlating position information and address information;
a connection destination database correlating the address information and connection destination information;
a position information receiving unit that receives from a network, installation position information concerning a wireless base station apparatus;
an address searching unit that searches the address database for address information corresponding to the installation position information received by the position information receiving unit;
a connection destination searching unit that searches the connection destination database for connection destination information corresponding to the address information obtained by the address searching unit; and
a connection destination information transmitting unit that transmits to the network, the connection destination information obtained by the connection destination searching unit.

6. The network configuration administrating apparatus according to claim 5 further comprising an update information acquiring unit that acquires from an external source, update information for the connection destination database, updates information registered in the connection destination database based on the acquired update information and forwards the update information to the connection destination information transmitting unit, wherein
the connection destination information transmitting unit transmits to the network, the update information received from the update information acquiring unit.

7. A network configuration administering method comprising:
acquiring installation position information;
transmitting the acquired installation position information to a network;
receiving the installation position information from the network;
searching an address database correlating position information and address information, for address information corresponding to the received installation position information;
searching a connection destination database correlating the address information and connection destination information, for connection destination information corresponding to the address information retrieved from the address database;
transmitting to the network, the connection destination information retrieved from the connection destination database;
receiving from the network, the connection destination information; and
setting the received connection destination information as a connection destination.

8. The network configuration administering method according to claim 7, further comprising:
acquiring from an external source, update information for the connection destination database;
updating the connection destination database based on the acquired update information; and
transmitting to the network, the update information.
